# EUROPEAN PATENT APPLICATION

(11) **EP 4 170 741 A1**
(43) Date of publication of application: **26.04.2023**
(21) Application number: 21203717.0
(22) Date of filing: 20.10.2021
(51) Int. Cl.: H01M 4/04, H01M 4/1397, H01M 4/58, H01M 10/054, H01M 10/058

(54) **A METHOD FOR MANUFACTURING A SODIUM OR POTASSIUM ION BATTERY CELL**

(71) Applicant: Altris AB, 753 18 Uppsala (SE)
(72) Inventor: BRANT, William, UPPSALA (SE); MOGENSEN, Ronnie, UPPSALA (SE); NORDH, Tim, UPPSALA (SE); ERIKSSON, Henrik, UPPSALA (SE)
(74) Representative: Kransell & Wennborg KB

(57) **Abstract**

The present disclosure generally relates to a method for manufacturing a sodium or potassium ion battery comprising a Prussian Blue analogue (PBA) as an active cathode material. The present disclosure also relates to a sodium or potassium ion battery produced by the method.

## Description

### TECHNICAL FIELD

The present disclosure generally relates to a method for manufacturing a sodium or potassium ion battery cell comprising a Prussian Blue analogue (PBA) as an active cathode material. The present disclosure also relates to sodium or potassium ion battery cell produced by the method.

### BACKGROUND

Lithium ion based batteries dominate the market for rechargeable batteries. However, the technology has drawbacks, not at least due to the relatively scarce resources of lithium. Although better than previous generations of secondary battery technologies, the lithium ion based batteries are not considered to be environmentally friendly, and are also costly from a recycling perspective.

These drawbacks have triggered the exploration of alternatives to lithium ion batteries. Sodium or potassium ion batteries represent attractive alternatives, and also represent viable means of supporting renewable energy sources for the purpose of load leveling and storing excess energy.

The performance of sodium or potassium ion batteries is greatly dependent on the properties of the electrode materials.

A typical process to manufacture an electrode, e.g. a cathode is to mix an active material, e.g. in the form of a powder with a solvent, conductive additives and binders to form a slurry. The slurry is then coated on a current collector, such as a metal foil. After this, the solvent is removed by drying. The cathode is then assembled with an anode, and any other components used to form a battery, such as a separator.

In conventional battery production, all steps of the process must typically be performed in a dry room. A dry room is a room wherein the moisture content of the air is controlled to a certain level. If the battery or any components thereof is exposed to moisture during assembly, this may lead to an impaired quality, e.g. a reduced charging capacity and an overall reduced performance.

Prussian blue analogue (PBA) cathode materials stand out as promising cathode materials for use in sodium or potassium ion batteries. Prussian blue analogues have a unique crystal structure with open three-dimensional frameworks and large interstitial voids, and are capable of storing sodium (and potassium) ions.

When PBA is used as the active cathode material, drying is particularly important, since any water present in the PBA structure must be removed for the material to fully utilize its capacity in a battery cell. The presence of water may negatively affect the electrochemical potential and cycling stability in a battery cell comprising PBA as a cathode material.

It is therefore essential to remove any water present in the PBA material when used in the final battery cell. However, once the water has been removed from the PBA material, the PBA material still has a strong affinity for water. PBA is extremely hygroscopic and may quickly shift from being anhydrous to becoming hydrous as soon as it is exposed to air or moisture.

The utilization of dry rooms is therefore an essential part in the process to prepare a sodium or potassium ion battery utilizing a Prussian blue analogue cathode material.

There are, however, various disadvantages associated with the utilization of dry rooms in the production of batteries. First, dry rooms require high investment costs. Furthermore, the energy demand is high because of the large volume of air that needs to be temperature controlled and dried.

Accordingly, there is a need to provide an improved method for the manufacturing of a sodium or potassium ion battery, which method is simple, inexpensive and which does not require the utilization of a dry room.

### SUMMARY

In view of above-mentioned and other drawbacks of the prior art, it is an object of the present disclosure to provide improvements in relation to sodium or potassium ion batteries, particularly with respect to providing a simple and inexpensive manufacturing method to produce such batteries.

According to a first aspect of the present disclosure, there is provided a method for manufacturing a sodium or potassium ion battery comprising:
a) providing a slurry comprising a Prussian Blue analogue, wherein the Prussian Blue analogue can exist in a first, hydrated phase, and a second, dehydrated phase, wherein the slurry comprises the first, hydrated phase of the Prussian Blue analogue,
b) applying the slurry to a current collector to form a cathode,
c) assembling the cathode with an anode and a separator to form an electrode stack,
d) arranging the electrode stack in a battery casing,
e) drying the battery casing comprising the electrode stack under conditions that allow for the Prussian Blue analogue to convert from the first, hydrated phase to the second, dehydrated phase,
f) adding an electrolyte to the battery casing, and
g) sealing the battery casing to form a battery cell, wherein the steps f) and g) are performed under inert conditions.

The Prussian blue analogue (PBA) may exist in a hydrated; i.e. hydrous phase, and in a dehydrated; i.e. anhydrous phase, in which the water has been removed. The present inventors have found that the method of manufacturing a sodium or potassium ion battery cell can be greatly improved if the conversion of the first, hydrated phase of the Prussian Blue analogue to the second, dehydrated phase, is performed as late as possible in the process; i.e. if the drying step is performed as late as possible.

In the first, hydrated phase of the Prussian Blue analogue, the material has a monoclinic crystal structure. The PBA material will generally be present in its monoclinic structure in the slurry, and in the steps preceding the drying step.

In the second, dehydrated phase, the PBA material has a rhombohedral crystal structure. For battery applications, the dehydrated, rhombohedral phase of PBA is desirably utilized to maximize the energy density and the cycling stability of the battery cell.

In the transition from the first to the second phase, the crystal lattice of the monoclinic structure is distorted, and there is a significant change in volume. The phase transition is associated with a substantial increased sensitivity to moisture. The dehydrated, rhombohedral structure of the Prussian Blue analogue is extremely susceptible to reverting back to the first, hydrated phase, i.e. to the monoclinic structure. This is, however, not desired since such reversion may result in significantly impairing the PBA structure, rendering the material unsuitable for use in a battery cell. Furthermore, considerable amounts of sodium or potassium may be lost during such reversion.

It is therefore important that the PBA material, after it has been shifted to the second, dehydrated phase, remains in this phase; i.e. maintains its rhombohedral crystal structure, throughout the remaining steps of the method. This is achieved by means of the method of the present disclosure.

By performing the steps of the method in the order a-g, and by adding the electrolyte and sealing the casing under inert conditions, the Prussian Blue analogue will be maintained in the second, dehydrated phase throughout the steps f) and g) of the method.

The slurry comprising the Prussian Blue analogue is typically an aqueous slurry. Accordingly, the Prussian Blue analogue is kept in the first, hydrated phase in the slurry.

The steps a)-d) of the method of the present disclosure may be performed in ambient conditions.

Preferably, the Prussian Blue analogue is present in the first, hydrated phase in the steps a)-d) of the method.

The inventors have found that it is desired to keep the Prussian Blue analogue in the first hydrated phase until the step of drying (step e); i.e. where the phase transition occurs. This way, undesired transitions between the first and second phases are avoided, and only one phase transition (during the drying step) is performed.

This allows for the steps preceding the drying step (step e) to be performed in ambient conditions. This is a considerable advantage compared to conventional battery manufacturing techniques, which typically require all method steps to be carried out in a dry room.

Accordingly, the steps of providing a PBA slurry (step a), applying the slurry to a current collector (step b), assembling the cathode with additional battery components (step c), and arranging the electrode stack in a battery casing (step d) may be performed in ambient conditions. At these stages of the process, the PBA material is less susceptible since it has not been converted to the second, dehydrated phase yet.

The inventors have also performed tests and compared the scenario where the drying step is performed after the assembly step (step c), but prior to the arrangement of the electrode stack in a battery casing (step d) (but where all the remaining steps are similar). The results from these tests demonstrate that the order of steps of the method has a significant impact on the capacity of the formed battery cell. The material performance is significantly affected by the conditions under which the material is processed and handled.

With the method of the present disclosure, significant improvements in capacity and cycling performance have been observed. Even a very short exposure to an ambient atmosphere (as was the case in the comparative test when the assembly was arranged in the casing after the drying step) resulted in an impaired performance of the battery cell.

The method of the present disclosure does not require the utilization of a dry room during any step of the battery production. A simple and cost-efficient method is therefore provided.

In exemplary embodiments, the step f) of adding the electrolyte and the step g) of sealing the battery casing are performed in the same device.

This is beneficial to prevent undesired exposure to moist and air during transfer of the electrode stack.

In exemplary embodiments, the step e) of drying is performed in a chamber connected to the device or comprised within the device.

Accordingly, the transfer of the dried battery stack to an electrolyte injection device is performed under inert conditions. Undesired exposure to moist and air is thereby prevented.

In exemplary embodiments, the step e) of drying is performed at a temperature in the range of from 110°C to 250°C, preferably of from 120°C to 200°C for at least 4 hours, preferably for at least 10 hours.

These drying conditions are suitable for enabling a phase transition of the first, hydrated phase of Prussian blue analogue to the second, dehydrated phase of the PBA. These drying conditions allow for the removal of any water present in the first phase of the PBA material, as well as potentially present in any other part of the battery cell. Furthermore, these drying conditions do not adversely affect the PBA structure or any other component of the battery cell.

In embodiments, the step e) of drying is performed under vacuum.

Vacuum is desirably utilized, since the drying step may then be performed at lower temperatures, and the drying time may be reduced.

In exemplary embodiments, the Prussian Blue analogue has the formula AₐM_{b}[M'_{c}(CN)₆]_{d}, wherein A is sodium or potassium, and 1 < a ≤ 2, wherein M and M' are transition metals, preferably selected from iron and/or manganese, wherein 0 < b < 2, 1 < c < 2, and wherein 1 < d < 2.

In embodiments, the Prussian Blue analogue is Prussian white having the formula AₐFe[Fe(CN)₆], wherein A is sodium or potassium, and wherein 1.8 < a ≤ 2, preferably wherein 1.9 < a ≤ 2.

Prussian white is associated with a high battery capacity and an enhanced capability in storing sodium (and potassium) ions. Prussian white is also environmentally friendly and can be produced at a low cost.

In exemplary embodiments, the battery casing is a pouch cell or a cylindrical cell.

Typically, the casing is a pouch cell.

The pouch cell may be formed of a flexible material, such as a foil. Accordingly, the battery casing is flexible and light and may be made in various sizes and shapes.

The sealed battery casing surrounds and seals the battery cell and acts as a barrier against any air or moisture permeation into and out of the battery cell.

In embodiments, the step of providing a slurry may comprise mixing the Prussian Blue analogue in the form of a powder, with a conductive additive and a binder.

The step of applying the slurry to a current collector may comprise coating the current collector with the slurry at a coating weight of from 5 mg/cm² to 30 mg/cm², preferably of from 10 mg/cm² to 20 mg/cm².

The thickness of the coating on the current collector may vary depending on the specific application and purpose. For example, the thickness of the PBA coating may be in the range of from 50 µm to 500 µm, e.g. from 100 µm to 250 µm.

The electrode may then be cut into the desired shape by techniques well known in the field.

The cathode may be assembled with an anode by stacking or winding the electrodes with a separator.

According to another aspect, there is provided a sodium or potassium ion battery cell produced according to the method described hereinbefore.

The battery cell has an electrochemical cycling curve being absent of a voltage plateau at 4 V.

The absence of a voltage plateau at 4 V is an indication that water has been removed from the battery cell and that the PBA material is present in the second, dehydrated phase. Such a battery cell is associated with a stable behavior during subsequent charges and discharges and has a high initial coulombic efficiency. A voltage plateau at 4 V is associated with water extraction and is an indication that the PBA material comprises the first, hydrated phase of the PBA material.

Further features of, and advantages with, the present disclosure will become apparent when studying the appended claims and the following description. The skilled addressee realizes that different features of the present disclosure may be combined to create embodiments other than those described in the following, without departing from the scope of the present disclosure.

### BRIEF DESCRIPTION OF THE DRAWINGS

The various aspects of the present disclosure, including its particular features and advantages, will be readily understood from the following detailed description and the accompanying drawings, in which:
Figure 1 schematically illustrates the steps of the method of the present disclosure.
Figure 2 schematically illustrates a sodium or potassium ion battery according to an exemplary embodiment of the present disclosure.
Figure 3a illustrates the cycling data for a sodium ion battery cell produced according to a method, wherein the battery cell has been dried *prior to* inserting the battery cell in a battery casing.
Figure 3b illustrates the cycling data for a sodium ion battery cell produced according to an exemplary embodiment of the method of the present disclosure.

### DETAILED DESCRIPTION

The present disclosure will now be described more fully hereinafter with reference to the accompanying drawings, in which currently preferred embodiments of the present disclosure are shown. The present disclosure may, however, be embodied in many different forms and should not be construed as limited to the embodiments set forth herein; rather, these embodiments are provided for thoroughness and completeness, and fully convey the scope of the present disclosure to the skilled person.

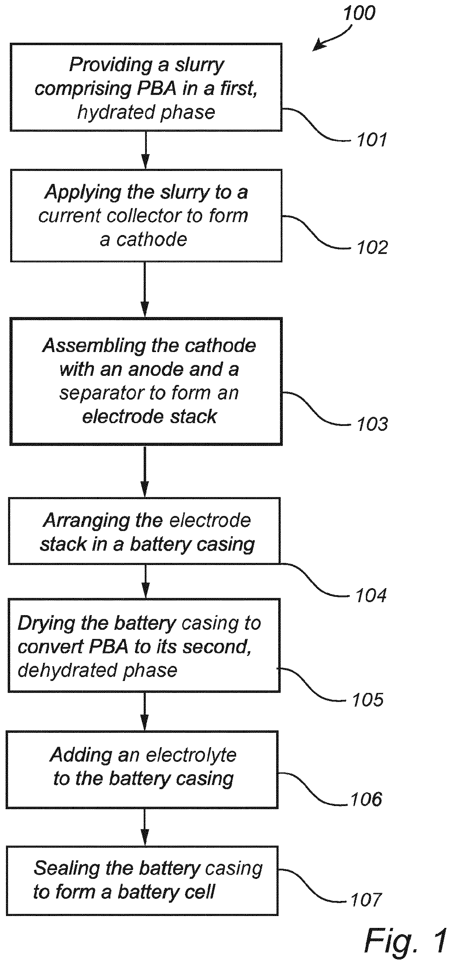

Figure 1a schematically outlines the steps of the method (100) for manufacturing a sodium or potassium ion battery cell of the present disclosure.

The method comprises:
a) providing a slurry comprising a Prussian Blue analogue, wherein the Prussian Blue analogue can exist in a first, hydrated phase, and a second, dehydrated phase, wherein the slurry comprises the first, hydrated phase of the Prussian Blue analogue (step 101),
b) applying the slurry to a current collector to form a cathode (step 102),
c) assembling the cathode with an anode and a separator to form an electrode stack (step 103),
d) arranging the electrode stack in a battery casing (step 104),
e) drying the battery casing comprising the electrode stack under conditions that allow for the Prussian Blue analogue to convert from the first, hydrated phase to the second, dehydrated phase (step 105),
f) adding an electrolyte to the battery casing (step 106), and
g) sealing the battery casing to form a battery cell (step 107), wherein the steps f) and g) are performed under inert conditions.

A key feature of the method of the present disclosure is to dry the electrode stack in its battery casing and not allowing for any exposure to moisture or air during the steps following the drying step.

Accordingly, undesired reversions between the first and the second phase of the PBA material, which may result in expansion and damage of the material, are prevented.

The inventors have found that significant improvements in capacity and cycling performance are obtained with a battery cell produced according to the method of the present disclosure. A battery cell with stable cycling performance is obtained, and undesired side reactions resulting from air exposure are avoided (see Example 2).

The step of providing a slurry (step 101) may comprise mixing the Prussian Blue analogue in the form of a powder, with a conductive additive and a binder.

The mixing may be performed by stirring and/or mixing, e.g. in an inert atmosphere for at least one hour.

The conductive additive may be any type of conductive additive known to the skilled person. For example, various types of carbon compounds, e.g. super P, C65, C45, carbon black, e.g. ketjen black may be utilized.

The binder is not limited to a particular binder. For example, alginate, carboxymethyl cellulose (CMC), styrene-butadiene rubber (SBR), polyvinylidene fluoride (PVdF) may be used.

The Prussian Blue analogue (PBA) powder may be prepared by means known in the art.

The slurry comprising the Prussian Blue analogue is typically an aqueous slurry. Accordingly, the Prussian Blue analogue is present in its first, hydrated phase in the slurry.

The step (102) of applying the slurry to a current collector may comprise coating the current collector with the slurry at a coating weight of from 5 mg/cm² to 30 mg/cm², preferably of from 10 mg/cm² to 20 mg/cm².

The slurry is preferably evenly applied onto at least one side of the current collector. The current collector is typically a metal foil or a metal sheet.

The current collector may be coated on one side or on two sides. When coated on two sides, the coating weight may be increased. For example, the coating weight may then be from 30 to 50 mg/cm².

The step of coating is by no means limited to a particular coating technique, but any means for coating the slurry on the current collector may be utilized. For example, slot-die coating may be utilized. Preferably, the coating is evenly distributed on at least one side of the current collector.

The thickness of the coating on the current collector may vary depending on the specific application and purpose. For example, the thickness of the PBA coating may be in the range of from 50 µm to 500 µm, e.g. from 100 µm to 250 µm.

Subsequently, the coated active PBA material may be pressed and compacted onto the current collector by e.g. calendaring, for instance by means of a roller press calendar. Accordingly, a consistent thickness and density of the coating may be achieved.

The electrode may then be cut into the desired shape by techniques well known in the field. For example, any type of slitting machine may be utilized.

In step 103, the cathode is assembled with an anode by stacking or winding the electrodes with a separator. Any technique known in the field may be utilized.

Subsequently, the battery cell is arranged into a battery casing (step 104).

In embodiments, the battery casing is a cylindrical cell or a pouch cell.

The battery casing may vary depending on the intended use and preference. The battery casing surrounds and seals the battery cell and acts as a barrier against any air or moisture permeation into and out from the battery cell.

Preferably, the battery casing is a pouch cell. In other words, the battery casing may be in the form of a pouch formed of a flexible material, such as a foil. Accordingly, the casing is flexible and light and may be made in various sizes and shapes.

For example, the pouch cell may comprise a polymer coated metal foil. The metal foil may comprise a polymer coating on one side or on both sides of the metal foil.

When the electrode stack is inserted into the pouch cell, the pouch cell may be partially sealed.

The battery casing is then dried under conditions that allow for the PBA material to convert to the second, dehydrated phase (step 105).

For example, the step of drying may be performed at a temperature in the range of from 110°C to 250°C, preferably of from 120°C to 200°C for at least 4 hours, preferably at least 10 hours.

A sodium or potassium ion battery having an improved capacity and cycling performance can thus be obtained. Also, these drying conditions do not adversely affect the PBA structure.

Preferably, the drying step is performed under vacuum since this allows for lower temperatures to be utilized during drying. The vacuum allows for drying to be performed at a temperature in a range of from around 110 to 160°C.

The step of drying may be performed at a pressure of from 10⁻³ to 100 mbar. For example, the pressure may be from 0.01 to 1 mbar.

However, the pressure is greatly dependent on the temperature utilized in the drying step. Accordingly, the pressure may vary depending on the temperature used during drying.

It is important that the drying step secures the removal of any water present in the active PBA material, as well as potentially present in any other part of the battery cell.

A dehydrated PBA material means that the PBA material comprises no water affecting the electrochemical behavior of a battery cell comprising the PBA material. This may be evidenced by an electrochemical cycling curve being absent of a voltage plateau at 4 V. Such a voltage plateau is associated with water extraction and is an indication that the PBA has not been fully transitioned from the first, hydrated phase to the second, dehydrated phase.

An important advantage of the method of the present disclosure is that no dry room is required at any step in the battery production. Accordingly, the method is simple and is associated with low costs.

The method further comprises the step of adding an electrolyte to the battery cell after the step of drying, wherein the electrolyte is added under inert conditions (step 106).

As used herein, the term "inert conditions" means an atmosphere absent of oxygen and water. Preferably, a glove box is utilized, i.e. a closed chamber free from air and moisture. The glove box may comprise sealed-in gloves, for electrolyte injection. The glove box may be filled with Argon (Ar) gas.

Preferably, the electrolyte is a non-aqueous electrolyte. A non-aqueous electrolyte prevents water from interfering with the PBA coated cathode. Furthermore, a non-aqueous electrolyte offers a larger voltage window compared to aqueous electrolytes. Also, since the battery cell has been dried and the PBA is dehydrated, there is substantially no water present in the active PBA material or in the battery cell that can interfere with the non-aqueous electrolyte.

The present disclosure is not limited to the use of a specific non-aqueous electrolyte. The non-aqueous electrolyte solution typically comprises a solvent or blends of solvents and at least one dissolved salt.

For example, the non-aqueous electrolyte may e.g. comprise ethylene carbonate, diethyl carbonate, dimethyl carbonate and/or any mixtures thereof. The non-aqueous electrolyte may comprise a salt, such as sodium hexafluorophoshate (NaPF₆) or sodium tetrafluoroborate (NABF₄). The non-aqueous electrolyte may also comprise additives.

In embodiments, the non-aqueous electrolyte comprises an alkali-metal bis(oxalato)borate salt, wherein the alkali metal ion is selected from sodium (Na⁺) and potassium (K⁺). Such a non-aqueous electrolyte solution is fluorine-free, environmentally friendly, safe and has a high ionic conductivity and electrochemical stability.

The battery casing is thereafter sealed under inert conditions (step 107).

The step f) of adding the electrolyte and the step g) of sealing the battery casing may be performed in the same device. For example, a glove box may be utilized.

The step d) of drying may be performed in a chamber connected to the device or comprised within the device.

For example, the drying step may be performed in a chamber forming a separate compartment of the device.

In embodiments, the step f) of adding the electrolyte and the step g) of sealing the battery casing are performed in the same glove box. The step of drying may be performed in a transfer chamber, which may also be referred to as an antechamber, connected to or forming part of the glove box. The transfer chamber may comprise means for applying vacuum.

After drying in the antechamber, the battery casing may be transferred to a different compartment of the device for electrolyte injection and sealing.

The step of transferring the battery casing after step e) of the method to a device for electrolyte injection is performed under inert conditions. Accordingly, the battery casing is not exposed to any moist or air, and the PBA material is kept in its second, dehydrated phase.

In exemplary embodiments, the Prussian Blue analogue has the formula AₐM_{b}[M'_{c}(CN)₆]_{d}, wherein A is sodium or potassium, and 1 < a ≤ 2, wherein M and M' are transition metals, preferably selected from iron and/or manganese, wherein 0 < b < 2, 1 < c < 2, and wherein 1 < d < 2.

In embodiments, the Prussian Blue analogue is Prussian white having the formula AₐFe[Fe(CN)₆], wherein A is sodium or potassium, and wherein 1.8 < a ≤ 2, preferably wherein 1.9 < a ≤ 2.

Prussian white is associated with a high battery capacity and an enhanced capability in storing sodium (and potassium) ions. Prussian white is also environmentally friendly and can be produced at a low cost.

In embodiments, where the Prussian Blue analogue is a Prussian white material, this material may be prepared according to the method described in WO2018/056890, assigned to Altris AB.

According to another aspect, there is provided a sodium or potassium ion battery cell produced according to the method described hereinbefore.

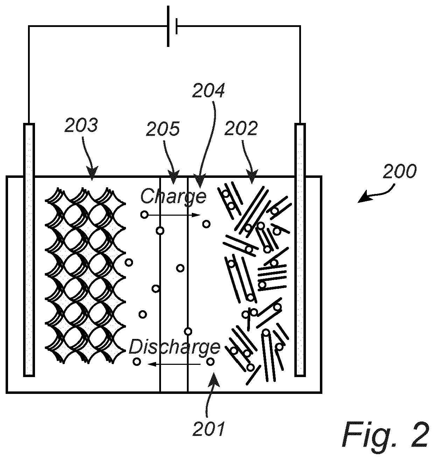

Figure 2 illustrates the schematic principles of a sodium or potassium ion battery 200 utilizing sodium or potassium ions 201 as charge carriers. The battery stores energy in chemical bonds of the negative electrode, i.e. the anode 202. Charging the battery 200 forces Na⁺ or K⁺ ions 201 to de-intercalate from the positive electrode; i.e. the cathode 203 and migrate towards the anode 202. During discharge, the process reverses. Once a circuit is completed, electrons pass back from the anode 202 to the cathode 203 and the Na⁺ or K⁺ ions 201 travel back to the cathode 203. During discharge of the battery, as illustrated in figure 2, oxidation takes place at the anode 202, while reduction takes place at the cathode 203. The current flow is determined by the potential difference between the cathode 203 and the anode 202, the cell voltage.

The two electrodes are separated by a separator 205 infiltrated with an electrolyte 204.

As used herein the term "battery" means a device comprising one or more battery cells.

A "battery cell" comprises a positive electrode; i.e. a cathode, a negative electrode; i.e. an anode and a separator. In the battery cell, chemical energy is transformed into electricity by reduction and oxidation (redox) reactions at the electrodes.

The cathode 203 utilized in a sodium or potassium ion battery of the present disclosure comprises a current collector coated with the Prussian blue analogue material as described hereinbefore.

The negative electrode material, i.e. the anode 202, is not particularly limited as long as it is a material capable of storing/releasing sodium or potassium ions. Examples include metal composite oxides, sodium metal, sodium alloys, silicon, silicon-based alloys, tin-based alloys, bismuth-based alloys, metal oxides, conductive polymers, Na-Co-Ni-based materials, hard carbon and the like. The anode may be a metal foil coated with an active anode material.

The battery cell may further comprise a separator 205 to prevent electrical short circuit between the negative and the positive electrodes, and to provide mechanical stability to the cell. The separator material can be any material which is chemically stable and electrically insulating, e.g. polymer films commonly made from polypropylene, polyethylene or combinations of these. The separator is preferably heat-stable at temperatures ranging up to 250°C.

### Example 1: Drying outside the casing

Prototype Prussian white cells were stacked with a heat resistant separator and high mass-loading electrodes. The stacked prototype was dried at 150 °C for 12 hours under high vacuum (<2*10⁻² mBar) in an oven in order to remove all water from the electrodes. After the drying was completed, the cell stack was moved from the oven to a pouch cell casing for electrolyte injection and sealing. This operation included exposing the electrode stack to ambient conditions for a brief amount of time (less than three minutes) followed by a drying step at 120 °C for 1-3 hours.

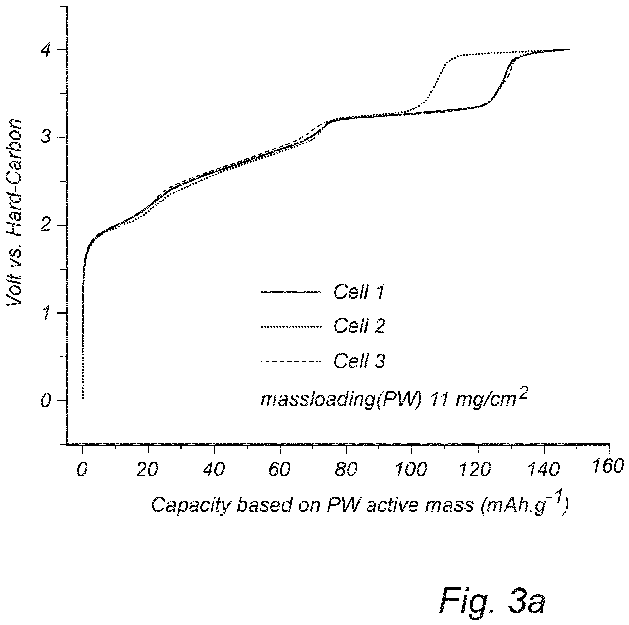

The cycling data in figure 3a shows that the electrode stack contains both the anhydrous phase of Prussian white and the hydrated phase of Prussian white i.e., both the rhombohedral and monoclinic structures. This is clearly evidenced by the 4 Volt plateau that appears at the end of charge and is associated with water extraction from the cathode. The water content in the cells caused gas evolution in the cells and no discharge was possible.

### Example 2: Drying in the casing

Prototype Prussian white cells were stacked with separator and high mass-loading electrodes. The stacked prototype was transferred to a pouch-cell casing and dried at 150 °C for 12 hours under high vacuum (<2*10⁻² mBar) in order to remove all water from the electrodes. After the drying was completed the cell stack was injected with electrolyte and sealed without exposure to ambient atmosphere. This operation is possible because the casing with electrode stack does not need any assembly step before injection and sealing.

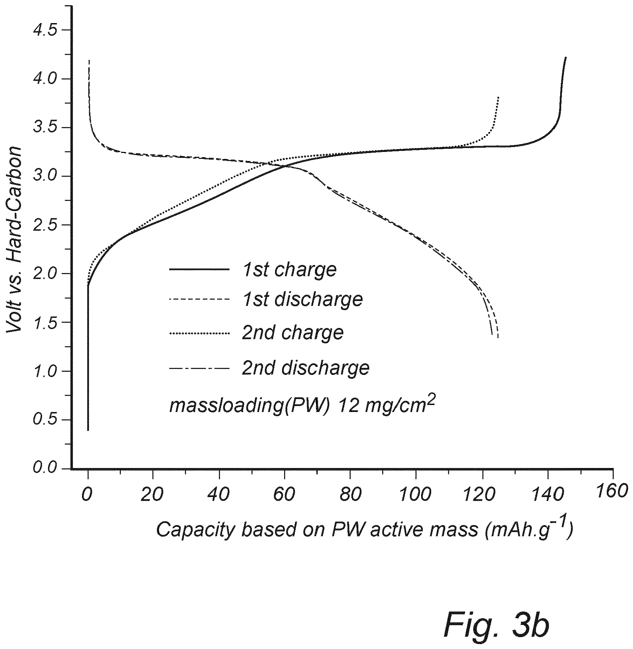

The cycling data in figure 3b shows that the electrode stack contains only the anhydrous phase of Prussian white i.e., the rhombohedral phase. This is clearly evidenced by the absence of a 4 Volt plateau that appears at the end of charge and is associated with water extraction from the cathode. The absence of water enabled the cells to cycle with initial coulombic efficiency above 85 % and stable behavior during subsequent charges and discharges.

To summarize, the material is dry and cycles without any side reactions.

Terms, definitions and embodiments of all aspects of the present disclosure apply mutatis mutandis to the other aspects of the present disclosure.

Even though the present disclosure has been described with reference to specific exemplifying embodiments thereof, many different alterations, modifications and the like will become apparent for those skilled in the art.

Variations to the disclosed embodiments can be understood and effected by the skilled addressee in practicing the present disclosure, from a study of the drawings, the disclosure, and the appended claims. Furthermore, in the claims, the word "comprising" does not exclude other elements or steps, and the indefinite article "a" or "an" does not exclude a plurality.

## Claims

1. A method for manufacturing a sodium or potassium ion battery cell comprising
a) providing a slurry comprising a Prussian Blue analogue, wherein said Prussian Blue analogue can exist in a first, hydrated phase, and a second, dehydrated phase, wherein said slurry comprises said first, hydrated phase of the Prussian Blue analogue,
b) applying said slurry to a current collector to form a cathode,
c) assembling said cathode with an anode and a separator to form an electrode stack,
d) arranging said electrode stack in a battery casing,
e) drying said battery casing comprising said electrode stack under conditions that allow for said Prussian Blue analogue to convert from said first, hydrated phase to said second, dehydrated phase,
f) adding an electrolyte to said battery casing, and
g) sealing said battery casing to form a battery cell, wherein said steps f) and g) are performed under inert conditions.

2. The method according to claim 1, wherein said Prussian Blue analogue is maintained in said second, dehydrated phase throughout said steps f) and g) of said method.

3. The method according to claim 1 or claim 2, wherein said steps a)-d) of said method are performed in ambient conditions.

4. The method according to any one of the preceding claims, wherein said Prussian Blue analogue is present in said first, hydrated phase in said steps a)-d) of said method.

5. The method according to any one of the preceding claims, wherein said step f) of adding the electrolyte and said step g) of sealing the battery casing are performed in the same device.

6. The method according to claim 5, wherein said step e) of drying is performed in a chamber connected to said device or comprised within said device.

7. The method according to any one of the preceding claims, wherein said step e) of drying is performed at a temperature in the range of from 110°C to 250°C, preferably of from 120°C to 200°C for at least 4 hours, preferably for at least 10 hours.

8. The method according to any one of the preceding claims, wherein said step e) of drying is performed under vacuum.

9. The method according to any one of the preceding claims, wherein said Prussian Blue analogue has the formula AₐM_{b}[M'_{c}(CN)₆]_{d}, wherein A is sodium or potassium, and 1 < a ≤ 2, wherein M and M' are transition metals, preferably selected from iron and/or manganese, wherein 0 < b < 2, 1 < c < 2, and wherein 1 < d < 2.

10. The method according to any one of the preceding claims, wherein said Prussian Blue analogue is Prussian white having the formula AₐFe[Fe(CN)₆], wherein A is sodium or potassium, and wherein 1.8 < a ≤ 2, preferably wherein 1.9 < a ≤ 2.

11. The method according to any one of the preceding claims, wherein said battery casing is a pouch cell.

12. The method of any one of the preceding claims, wherein said step of providing a slurry comprises mixing said Prussian Blue analogue in the form of a powder, with at least a conductive additive and a binder.

13. The method of any one of the preceding claims, wherein said step of applying said slurry to a current collector comprises coating said current collector with said slurry at a coating weight of from 5 mg/cm² to 30 mg/cm², preferably of from 10 mg/cm² to 20 mg/cm².

14. A sodium or potassium ion battery cell produced according to the method of any one of claims 1-13.

15. A sodium or potassium ion battery cell according to claim 14, wherein said battery cell has an electrochemical cycling curve being absent of a voltage plateau at 4 V.
